# EUROPEAN PATENT APPLICATION

(11) **EP 1 482 668 A1**
(43) Date of publication of application: **01.12.2004**
(21) Application number: 02702782.0
(22) Date of filing: 07.03.2002
(51) Int. Cl.: H04L 1/16

(54) **PACKET TRANSMITTER, PACKET RECEIVER AND PACKET TRANSMISSION METHOD**

(71) Applicant: MATSUSHITA ELECTRIC INDUSTRIAL CO., LTD., Kadoma-shi, Osaka 571-8501 (JP)
(72) Inventor: IDO, Daiji, Yokohama-shi, Kanagawa 236-0005 (JP); IMURA, Koji, Machida-shi, Tokyo 194-0013 (JP); MIYAZAKI, Akihiro, Sakai-shi, Osaka 591-8032 (JP); HATA, Koichi, Katano-shi, Osaka 576-0021 (JP)
(74) Representative: Grünecker, Kinkeldey, Stockmair & Schwanhäusser Anwaltssozietät
(86) International application number: PCT/JP2002/002103
(87) International publication number: WO 2003/075504

(57) **Abstract**

Update request signal generator 107 generates an update request signal when an NG signal is output from CRC section 104 a predetermined number of times, continuously. More specifically, update request signal generator 107 comprises a counter that counts the number of times errors are detected, increments the counter by 1 every time an NG signal is output from CRC section 104, and resets the counter when an OK signal is output from CRC section 104 or every time the value on the counter reaches a predetermined number of times. Then, update request signal generator 107 generates an update request signal when the value on the counter reaches the predetermined number of times.

## Description

### Technical Field

The present invention relates to a packet transmitting apparatus, a packet receiving apparatus, and a packet transmission method. More particularly, the present invention relates to a packet transmitting apparatus that compresses the header of a packet and performs transmission, a packet receiving apparatus that decompresses the header of a received packet, and a packet transmission method.

### Background Art

Presently, the typical protocols (communication rules) used to transmit packets on the Internet include RTP (Real-time Transport Protocol), UDP (User Data Protocol), and IP (Internet Protocol). In packet transmission, these protocols are usually used in combination. Besides, these protocols are standardized by the IETF (Internet Engineering Task Force).

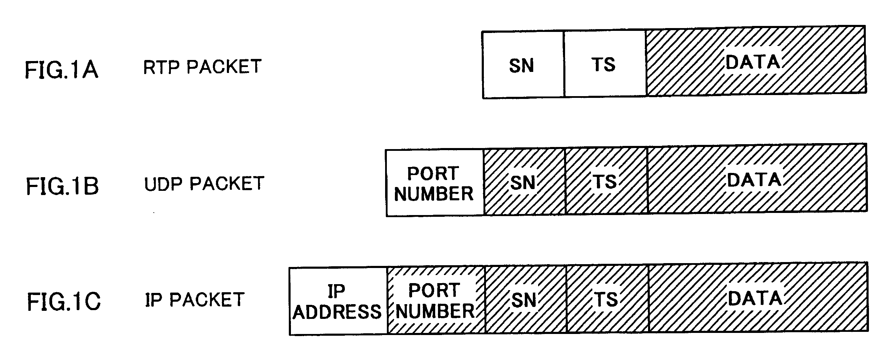

In each of the above protocols, information such as described below is appended to transmission data as a header, to generate a packet. That is, according to RTP, as shown in FIG.lA, a sequence number (hereinafter "SN"), which denotes the order of data, and a timestamp (hereinafter "TS"), which is time information, are appended to data to generate an RTP packet. Next, according to UDP, as shown in FIG.1B, a port number of the receiving end is appended to an RTP packet, to generate a UDP packet. Furthermore, according to IP, as shown in FIG.1C, an address of the receiving end on the Internet (IP address) is appended to a UDP packet, to generate an IP packet. Then, this IP packet is transmitted to the receiving end.

Header compression technology is a technology for improving packet transmission efficiency by compressing the headers and performing transmission. The compression methods for the respective headers appended in RTP, UDP, and IP are stipulated in RFC (Request for Comments) 2508 by the IETF. The header compression methods stipulated in RFC2508 are principally for wired packet transmission such as the Internet.

In contrast to this, one header compression method presently proposed by the IETF for wireless packet transmission such as in a cellular phone network is ROHC (RObust Header Compression) . The rate of error occurrence tends to be higher in a wireless zone than in a wired zone, ROHC is a header compression method that features high tolerance for errors that occur during transmission.

Moreover, considering that because the bandwidth that a wireless zone can make use of is narrower than that of a wired zone, ROHC sets higher header compression rates than the compression methods stipulated in RFC2508. Incidentally, ROHC is standardized by the IETF in RFC 3095.

To be more specific, ROHC compresses the headers as follows. That is, an uncompressed header containing an IP address and a port number and the like is transmitted not every time but only at predetermined intervals. If a certain regularity appears between increase in the SN and increase in the TN, the SN alone is transmitted. Moreover, as for the SN, only a number of bits of the lower bits are transmitted, and only when a carry occurs are the entire bits transmitted. At the transmitting end header compression is performed with reference to reference information called context, and, at the receiving end header decompression is performed with reference to the same context as used at the transmitting end.

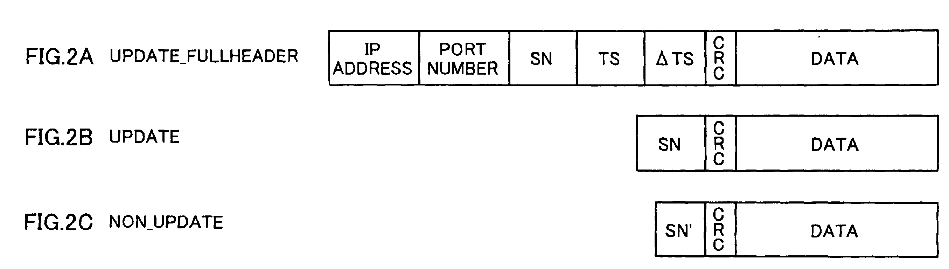

Furthermore, in ROHC, there are three types of headers as shown in FIG.2A-2C, referred to as UPDATE_FULLHEADER, UPDATE, and NON_UPDATE, respectively.

UPDATE_FULLHEADER shown in FIG.2A contains, besides an SN and a CRC (Cyclic Redundancy Check) bit for checking when the receiving end decompresses the header whether the decompression has been successful, an IP address, a port number, a TS, and a ΔTS, which is increase in the TS in correspondence to increase in the SN, and thus makes an uncompressed header. This UPDATE_FULLHEADER is updated at intervals or every time a change occurs in ΔTS. UPDATE shown in FIG.2B does not contain an IP address, a port number, a TS, and a ΔTS, but contains an SN and a CRC bit. Furthermore, NON_UPDATE shown in FIG.2C does not contain an IP address, a port number, a TS and a ΔTS, but contains an SN' represented with only some bits of the lower bits of an SN, and a CRC bit.

The receiving end changes to update or not to update the context for every UPDATE_FULLHEADER, UPDATE, and NON_UPDATE. That is, at the receiving end, when an UPDATE_FULLHEADER is received, the context is updated with the content of the received header as it is as the context. When an UPDATE is received, the header is decompressed with reference to the context, and thereafter the context is updated with the content of the decompressed header. Moreover, when a NON-UPDATE is received, though the header is decompressed with reference to the context, the context is not updated.

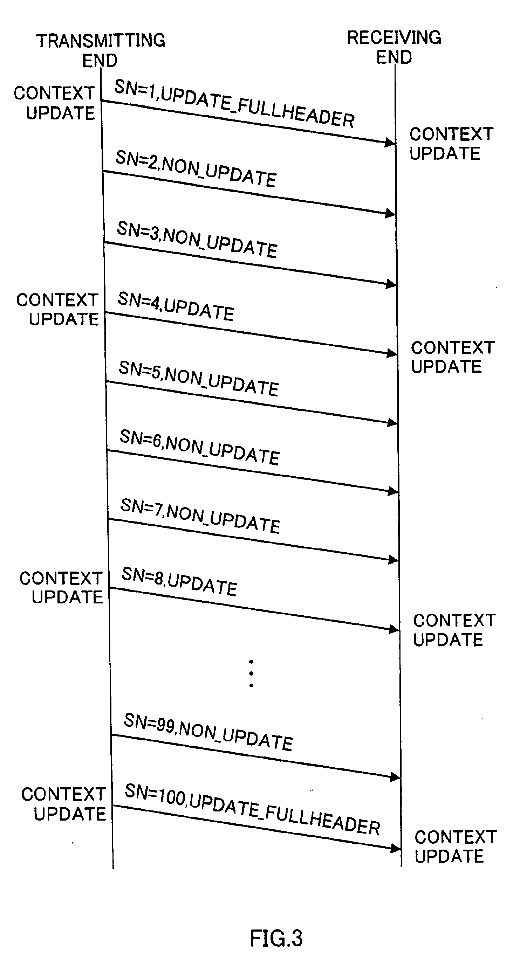

An example of the steps of packet transmission/reception using ROHC will be described next with a sequence diagram. FIG.3 is a sequence diagram illustrating conventional steps of packet transmission/reception using ROHC.

Referring to FIG.3, the transmitting end (that is, the header compressing end) transmits an UPDATE_FULLHEADER of SN=1 upon the first transmission after communication starts. At the transmitting end, the context is updated when the UPDATE_FULLHEADER is transmitted. Similarly, at the receiving end (that is, the header decompressing end), the context is updated when the UPDATE_FULLHEADER is received. By this means, the context of the transmitting end and the context of the received end match.

Upon the transmission of SN=2 and SN=3, the transmitting end generates and transmits a NON_UPDATE with reference to the context updated by the UPDATE_FULLHEADER of SN=1. Based on a comparison result between the SN that is transmitted and the SN of the context, the transmitting end determines that a carry did not occur in the SN, and transmits a NON_UPDATE. Upon the reception of SN=2 and SN=3, the receiving end decompresses the headers with reference to the context updated by the UPDATE_FULLHEADER of SN=1.

Upon the transmission of SN=4, the transmitting end generates and transmits an UPDATE with reference to the context updated by the UPDATE_FULLHEADER of SN=1. Based on a comparison result between the SN that is transmitted and the SN of the context, the transmitting end determines that a carry occurred in the SN, and transmits a UPDATE. Upon transmitting the UPDATE the transmitting end updates the context. Upon the reception of SN=4, the receiving end decompresses the header with reference to the context updated by the UPDATE_FULLHEADER of SN=1, and thereafter updates the context with the content of the decompressed header. By this means, the context at the transmitting end and the context at the receiving end match.

Incidentally, a carry here refers to a mismatch between the most significant bit of the SN of a context and the most significant bit of the SN of a packet, provided that the SN's are expressed in binary of a predetermined number of bits. For instance, referring to SN=1-SN=4 shown in FIG.3, if an SN is expressed in 3 bits and an SN' is expressed in 2 bits, upon change from SN=3 to SN=4, "011" becomes "100," and a carry occurs. Thereupon SN' changes from "11" to "00, "whichmakes it difficult to judge whether the SN before compression was "100" or "000." For this reason, every time a carry occurs, an UPDATE is transmitted and the context is updated.

In SN=5-SN=99, the same above steps are repeated. Upon the transmission of SN=100, the transmitting end transmits an UPDATE_FULLHEADER. That is, in this example, an UPDATE_FULLHEADER is transmitted once in every 100 times.

Upon receiving the UPDATE_FULLHEADER, the receiving end, without reference to the context, updates the context with the content of the received header as it is, and by thus transmitting the UPDATE_FULLHEADER on a regular basis, it is possible to prevent the receiving end from making reference to faulty context and decompressing faulty headers.

By the way, packets that are transmitted are each appended with a CRC bit as shown in FIG.2A-2C, so that, after the headers are decompressed, the receiving end is able to detect errors in the decompressed headers and discard the packets with errors. However, when an error beyond error detection capacity occurs, there may be cases where the error cannot be detected by CRC.

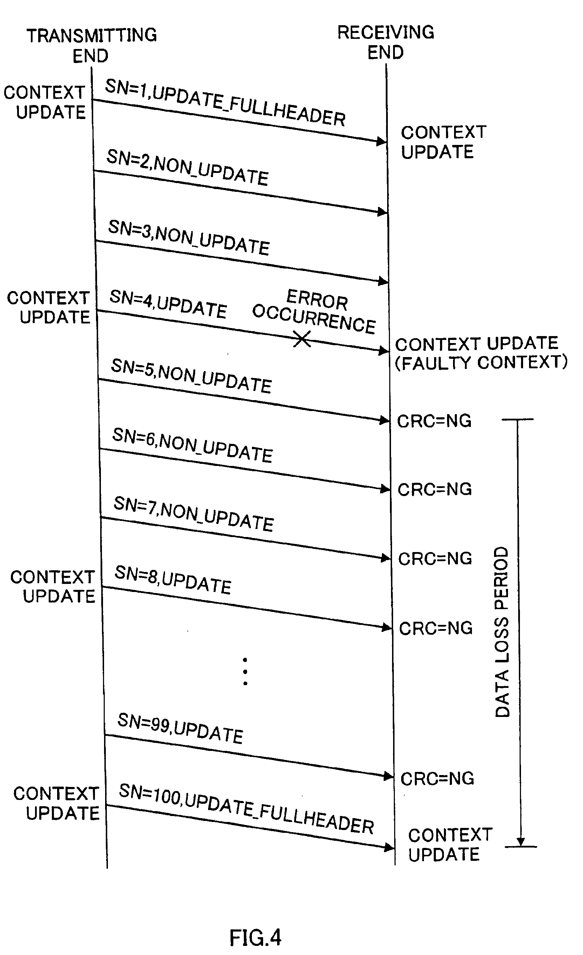

For instance, as shown in FIG.4, when an error occurs during the transmission of the UPDATE of SN=4 and the receiving end is incapable of detecting the error, the context is updated with the faulty header. In this way, the context updated with the header of SN=4 becomes a faulty context. In SN=5-SN=99, the receiving end decompresses the headers with reference to this faulty context, so the headers of SN=5-SN=99 become all faulty (that is, CRC=NG) and the packets of SN=5-SN=99 are all discarded. That is, this results in the situation at the receiving end where the data of SN=5-SN=99 is lost.

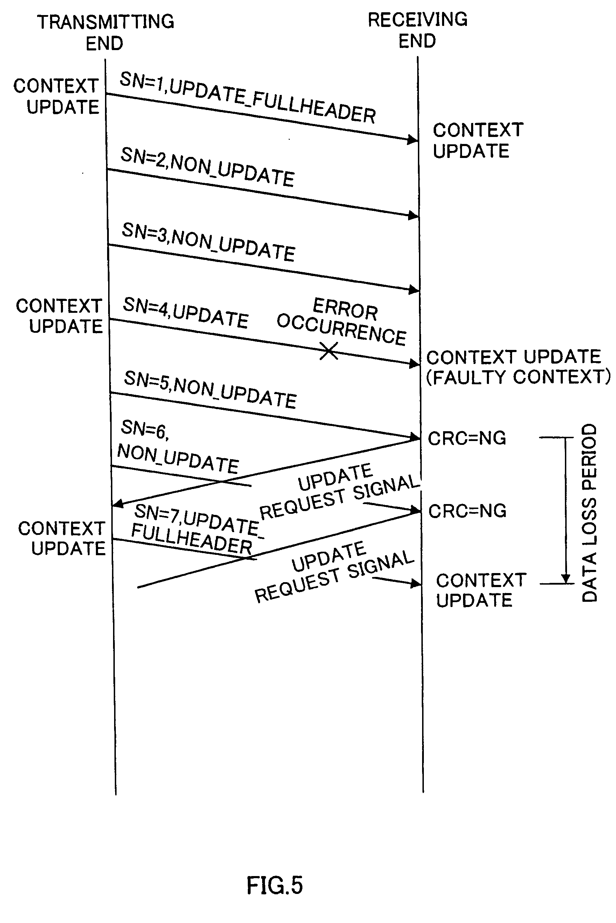

So, as shown in FIG.5, it is possible to employ the steps whereby, when an error is detected in a header (that is, when CRC=NG), the receiving end makes a request for a context update to the transmitting end, and the transmitting end transmits an UPDATE_FULLHEADER in response to the update request. By employing the above steps, the context at the receiving end is updated to a correct context by the UPDATE_FULLHEADER of SN=7, so that the period in which data is lost can be shortened.

Still, the receiving end can detect errors by means of CRC and yet is still unable to know the cause of errors. In other words, when an error is detected in a header, the receiving end is unable to judge whether the error is specific to the header and occurred during the transmission of the packet or the error occurred due to a faulty context. In other words, it is not possible to judge whether or not the context is faulty.

When the context is correct the receiving end needs not to request a context update even when an error is detected in a header. However, in the steps shown in FIG.5, a context update is always requested when an error is detected in a header. So, in the steps shown in FIG.5, there may be cases where an UPDATE_FULLHEADER is transmitted despite that transmitting an UPDATE or a NON_UPDATE is sufficient.

UPDATE_FULLHEADER carries a larger amount of data in the header field than UPDATE or NON_UPDATE. So, employing the steps such as shown in FIG.5 reduces header compression efficiency. In other words, packet transmission efficiency decreases.

### Disclosure of Invention

It is therefore an object of the present invention to provide a packet transmitting apparatus, a packet receiving apparatus, and a packet transmission method that do not reduce header compression efficiency and packet transmission efficiency and that shorten the period in which data is lost at the receiving end.

When a context is faulty, all the headers decompressed with reference to this context become faulty. In contrast, when a context is not faulty, the headers decompressed with reference to this context may or may not become faulty. That is, when a context is faulty, errors continue to occur in the headers and the frequency of error occurrence thus increases, and when a context is not faulty, the frequency of error occurrence decreases.

The inventor has arrived at the present invention after contemplating the frequency of error occurrence and finding out that it is possible to judge whether or not a context is faulty based on increase and decrease in the frequency of error occurrence.

Now, to achieve the above object, the present invention is configured to judge that a context is faulty and update the context when the frequency of error occurrence is high, and, when the frequency of error occurrence is low, judge that the error is not due to the context but is specific to the header of the packet that occurred during the transmission of the packet and not update the context.

### Brief Description of Drawings

FIG.1A is a frame format showing a configuration of an RTP packet;
FIG.1B is a frame format showing a configuration of a UDP packet;
FIG.1C is a frame format showing a configuration of an IP packet;
FIG.2A is a frame format showing a configuration of an UPDATE_FULLHEADER;
FIG.2B is a frame format showing a configuration of an UPDATE;
FIG.2C is a frame format showing a configuration of a NON_UPDATE;
FIG.3 is a sequence diagram illustrating conventional steps of packet communication using ROHC;
FIG.4 is a sequence diagram illustrating conventional steps of packet communication using ROHC;
FIG.5 is a sequence diagram illustrating an example of the steps employed when a context is updated faultily;
FIG.6 is a block diagram showing a configuration of a packet receiving apparatus according to the first embodiment of the present invention;
FIG.7 is a block diagram showing a configuration of a packet transmitting apparatus according to the first embodiment of the present invention;
FIG.8 is a block diagram showing a configuration of a transmission packet generator in a packet transmitting apparatus according to the first embodiment of the present invention;
FIG.9 is a sequence diagram illustrating the steps of transmission/reception in packet transmission performed between a packet transmitting apparatus according to the first embodiment of the present invention and a packet receiving apparatus according to the first embodiment of the present invention;
FIG.10 is a block diagram showing a configuration of a packet receiving apparatus according to the second embodiment of the present invention;
FIG.11 is a block diagram showing a configuration of a transmission packet generator of a packet transmitting apparatus according to the second embodiment of the present invention; and
FIG.12 is a sequence diagram illustrating the steps of transmission/reception in packet transmission performed between a packet transmitting apparatus according to the second embodiment of the present invention and a packet receiving apparatus according to the second embodiment of the present invention.

### Best Mode for Carrying Out the Invention

With reference to the accompanying drawings now, embodiment of the present invention will be described detail.

### (First Embodiment)

A case will be described here with the present embodiment where a packet receiving apparatus (that is, the header decompressing end) requests a context update when errors are detected continuously, and a packet transmitting apparatus (that is, the header compressing end) transmits an UPDATE_FULLHEADER in response to this update request.

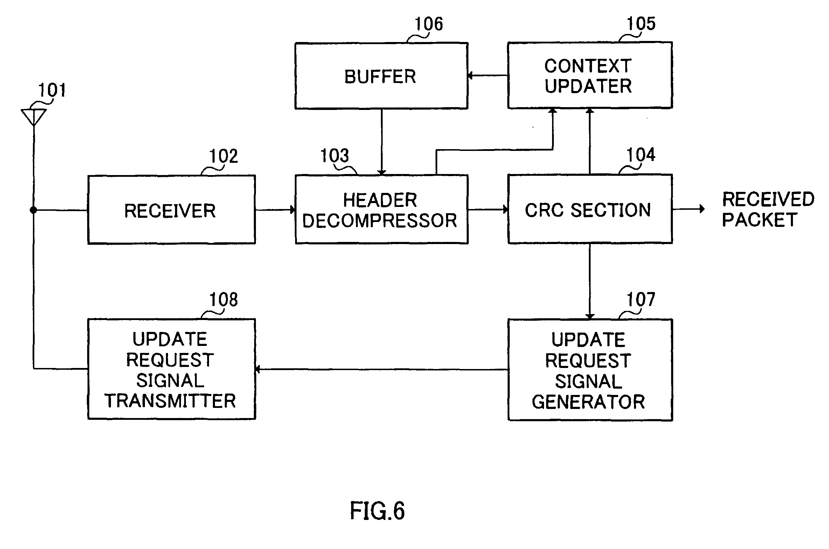

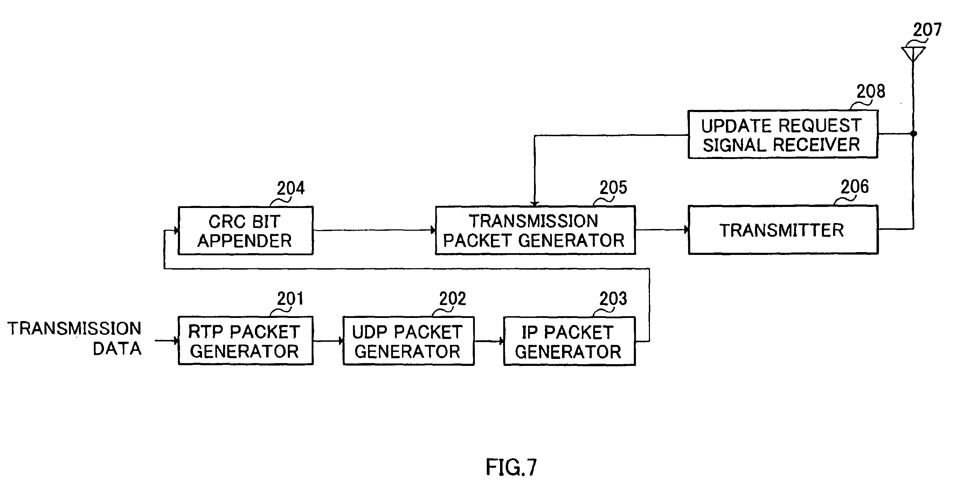

FIG.6 is a block diagram showing the configuration of the packet receiving apparatus according to the first embodiment of the present invention, and FIG. 7 is a block diagram showing the configuration of the packet transmitting apparatus according to the first embodiment of the present invention. A case will be described here where packets are transmitted through wireless channels.

Referring to the packet receiving apparatus shown in FIG.6, receiver 102 executes wireless processing (including down-conversion and A/D conversion) and demodulation processing of a packet received through antenna 101, and thereafter outputs the received packet to header decompressor 103.

Header decompressor 103 decompresses the header of the received packet with reference to a context held in buffer 106, and output the header-decompressed packet to CRC section 104. Moreover, header decompressor 103 reports to context updater 105 the type of the header of the received packet. That is, header decompressor 103 reports to context updater 105 which of UPDATE_FULLHEADER, UPDATE, and NON_UPDATE the header of the received packet is.

CRC section 104 has a CRC of the header of the packet output from header decompressor 103, and outputs the packet after the CRC as the received packet. Moreover, when an error is detected in the header, CRC section 104 reports this to update request signal generator 107 by means of an NG signal, and, when no error is detected, reports this to update request signal generator 107 by means of an OK signal. Moreover, when no error is detected in the header, CRC section 104 outputs to context updater 105 the packet output from header decompressor 103.

In accordance with the type of the header of the packet output from CRC section 104, context updater 105 updates the context held in buffer 106. That is, when the type reported from header decompressor 103 is UPDATE_FULLHEADER or UPDATE, context updater 105 updates the context with the header field of the packet output from CRC section 104, and, when the type reported from header decompressor 103 is NON_UPDATE, does not update the context.

Update request signal generator 107 generates an update request signal when an NG signal is output from CRC section 104 a predetermined number of times, continuously, and outputs the generated update request signal to update request signal transmitter 108. To be more specific, update request signal generator 107 has a counter that counts the number of times an error is detected and increments the counter by 1 every time an NG signal is output from CRC section 104, and resets the counter when an OK signal is output from CRC section 104 or every time the value on the counter reaches a predetermined number of times. Then, when the value on the counter reaches a predetermined number of times, update request signal generator 107 generates an update request signal.

Here an update request signal refers to a signal whereby the packet receiving apparatus requests a context update to the packet transmitting apparatus. That is, an update request signal is a signal whereby the packet receiving apparatus requests the packet transmitting apparatus to transmit UPDATE_FULLHEADER.

Update request signal transmitter 108 executes modulation processing and wireless processing (including D/A conversion and up-conversion) of the update request signal and thereafter transmits the update request signal to the packet transmitting apparatus through antenna 101.

Meanwhile, referring to the packet transmitting apparatus shown in FIG.7, RTP packet generator 201 divides transmission data into predetermined transmission units and thereafter appends an SN and a TS to the divided data and thus generates an RTP packet. Then, RTP packet generator 201 outputs the RTP packet to UDP packet generator 202.

UDP packet generator 202 generates an UDP packet by appending a port number of the receiving end to the RTP packet, and outputs this UDP packet to IP packet generator 203.

IP packet generator 203 appends an address (IP address) of the receiving end on the Internet to the UDP packet and generates an IP packet, and outputs the IP packet to CRC bit appender 204.

CRC bit appender 204 appends a CRC bit to the IP packet, and outputs the packet to transmission packet generator 205.

Transmission packet generator 205 compresses the header. Then, transmission packet generator 205 outputs the packet appended with the compressed header to transmitter 206 as a transmission packet. The configuration of transmission packet generator 205 will be described later.

Transmitter 206 executes modulation processing and wireless processing (including D/A conversion and up-conversion) of the transmission packet and thereafter transmits the transmission packet to the packet receiving apparatus through antenna 207.

Update request signal receiver 208 executes wireless processing (including down conversion and A/D conversion) and demodulation processing of the update request signal received through antenna 207, and thereafter outputs the update request signal to transmission packet generator 205.

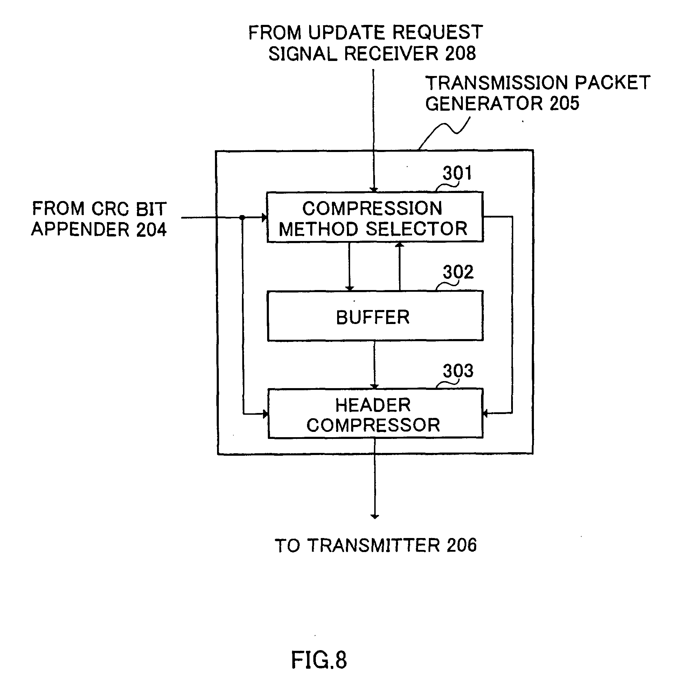

Next, the configuration of transmission packet generator 205 will be explained. FIG.8 is a block diagram showing the configuration of the transmission packet generator of the packet transmitting apparatus according to the first embodiment of the present invention.

Referring to transmission packet generator 205 shown in FIG.8, a packet appended with a header and a CRC bit is input from CRC bit appender 204 to compression method selector 301 and header compressor 303.

Compression method selector 301 selects the header compression method, and reports the selected compression method to header compressor 303. That is, compression method selector 301 selects one header from 3 types of headers, namely UPDATE_FULLHEADER, UPDATE, and NON_UPDATE, and reports the selected header type to header compressor 303.

When an update request signal is output from update request signal receiver 208 to compression method selector 301, compression method selector 301 selects UPDATE_FULLHEADER. On the other hand, when no update request signal is output from update request signal receiver 208 to compression method selector 301, compression method selector 301 selects one header from UPDATE_FULLHEADER, UPDATE, and NON_UPDATE as follows.

That is, for the packet transmitted first after communication starts, compression method selector 301 selects UPDATE_FULLHEADER. Thereafter, compression method selector 301 selects UPDATE_FULLHEADER on a regular basis. For example, compression method selector 301 selects UPDATE_FULLHEADER once in every 100 times.

Compression method selector 301 compares the SN of the header and the SN of the context held in buffer 302, selects UPDATE if a carry occurs in the SN, and selects NON_UPDATE if a carry does not occur in the SN.

Moreover, in either case where an update request signal is or is not output from update request signal generator 208, compression method selector 301, when having selected UPDATE_FULLHEADER or UPDATE, updates the context held in buffer 302 with the header of the packet output from CRC bit appender 204, and does not update the context when having selected NON_UPDATE.

Buffer 302 is a buffer for holding context. As described above, the context held in buffer 302 is updated by compression method selector 301 from time to time.

In accordance with the type of the header selected in compression method selector 301, header compressor 303 compresses the header of the packet output from CRC bit appender 204 and outputs the result to transmitter 206. Thereupon header compressor 303 refers to the context held in buffer 302 and compresses the header based on the difference from this context.

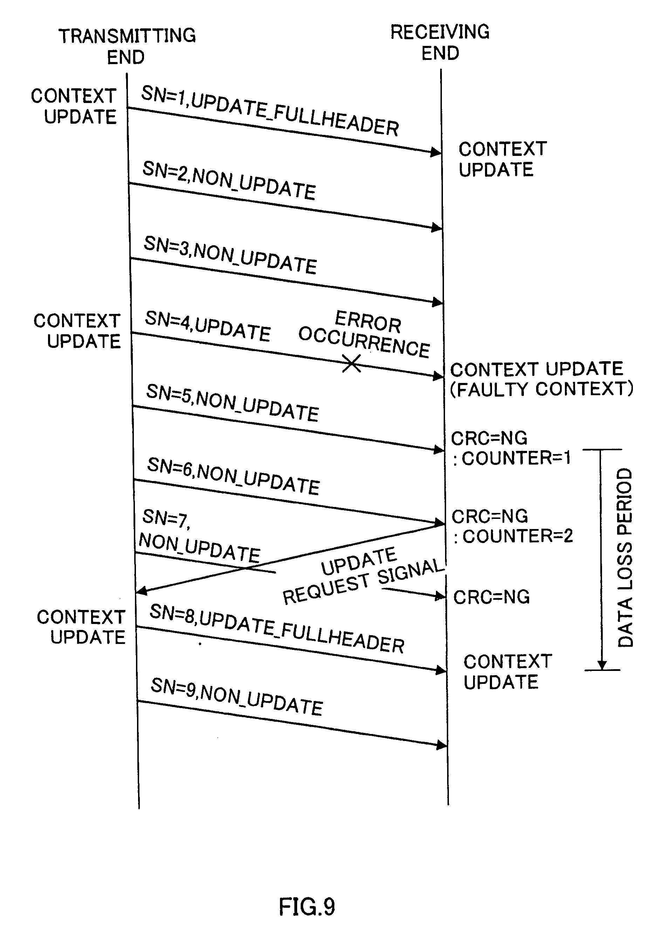

Next, the steps of transmission/reception in packet transmission performed between a packet transmitting apparatus of the above configuration and a packet receiving apparatus of the above configuration will be described in detail with reference to a sequence diagram. FIG.9 is a sequence diagram illustrating the steps of transmission/reception in packet transmission performed between a packet transmitting apparatus according to the first embodiment of the present invention and a packet receiving apparatus according to the first embodiment of the present invention. Incidentally, in FIG.9, the transmitting end refers to a packet transmitting apparatus of the above configuration, and the receiving end refers to a packet receiving apparatus of the above configuration.

Now assume that, as shown in FIG.9, an error occurs during transmission of an UPDATE of SN=4 and the packet receiving apparatus fails to detect this error. That is, assume that in the packet receiving apparatus the context is updated with the faulty header. The context then becomes a faulty context, and the CRC result of the header of the packet of SN=5, the CRC result of the header of the packet of SN=6, and the CRC result of the header of the packet of SN=7 will be all NG.

In the packet receiving apparatus shown in FIG.6, an NG signal for the header of the packet of SN=5 and an NG signal for the header of the packet of SN=6 are output from CRC section 104 continuously, and the counter of update request signal generator 107 becomes "2."

Now, assume that the predetermined number of times set in update request signal generator 107 is "2." Consequently, update request signal generator 107 generates an update request signal when the value on the counter becomes "2." By this means, when errors are detected continuously, that is, when the frequency of error occurrence is high, the packet receiving apparatus is able to transmit an update request signal. Incidentally, the counter that update request signal generator 107 comprises is reset when an update request signal is generated, as described above.

The packet transmitting apparatus, having received the update request signal, makes UPDATE_FULLHEADER the first packet to be transmitted after the reception of the update request signal. So, in the example shown in FIG.9, the packet of SN=8 becomes UPDATE_FULLHEADER. Then, in the packet receiving apparatus, when the packet of SN=8 is received, the context is updated correctly.

Thus, according to the present embodiment, the packet receiving apparatus requests a context update when errors are detected continuously, and the packet transmitting apparatus transmits UPDATE_FULLHEADER in response to this update request. By this means, UPDATE_FULLHEADER is transmitted only when the frequency of error occurrence is high, so that it is possible to shorten the period in which data is lost at the packet receiving apparatus without decreasing header compression efficiency and packet transmission efficiency.

### (Second Embodiment)

A case will be described here with the present embodiment where a packet receiving apparatus (that is, the header decompressing end) always requests a context update when detecting an error, and a packet transmitting apparatus (that is, the header compressing end) transmits UPDATE_FULLHEADER when a plurality of update requests are received in a predetermined period.

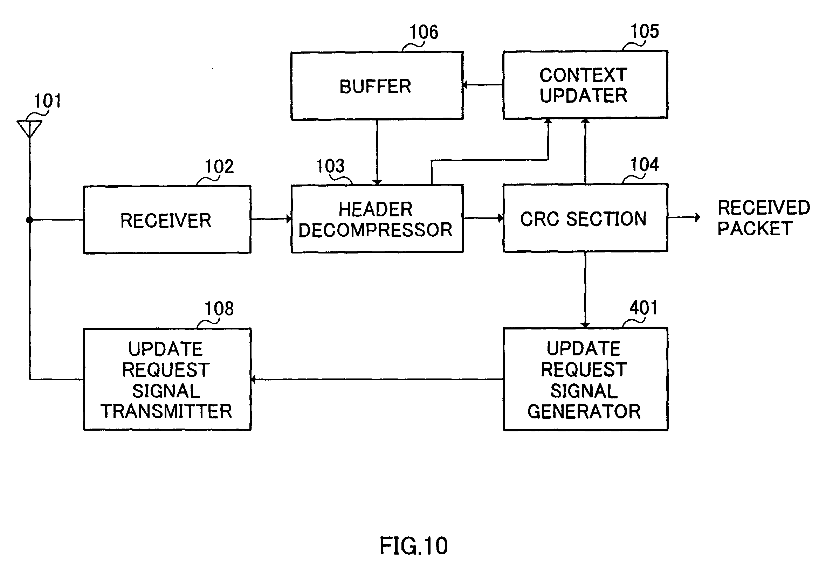

FIG.10 is a block diagram showing the configuration of the packet receiving apparatus according to the second embodiment of the present invention. Parts in FIG.10 identical to those shown in FIG.6 are assigned the same numerals without detailed explanation.

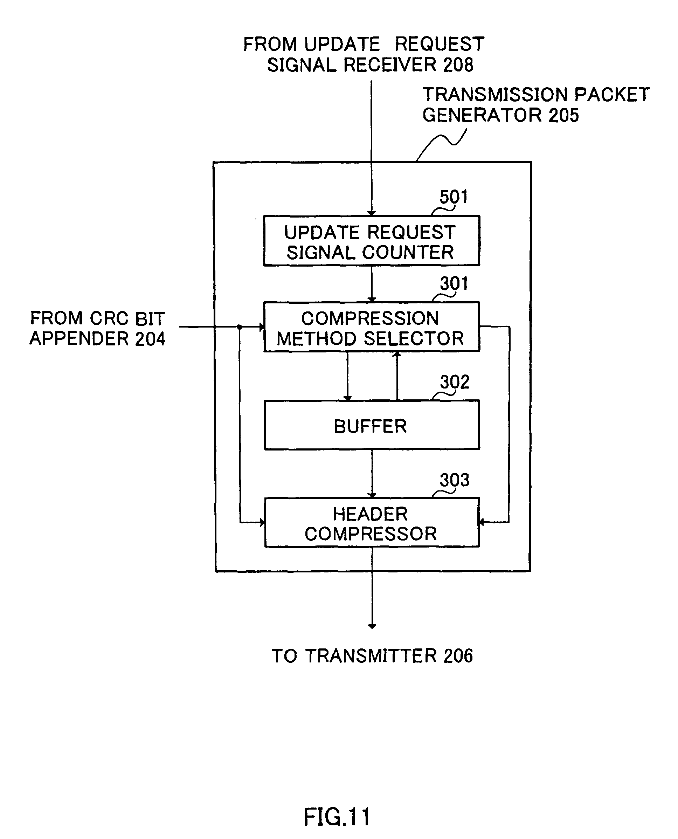

Moreover, the configuration of the packet transmitting apparatus according to the second embodiment differs from the first embodiment only in the inner configuration of transmission packet generator 205. Consequently, transmission packet generator 205 alone will be explained here. FIG.11 is a block diagram showing the configuration of a transmission packet generator of the packet transmitting apparatus according to the second embodiment of the present invention. Parts in FIG.11 identical to those shown in FIG.8 are assigned the same numerals without detailed explanation.

Referring to the packet receiving apparatus shown in FIG.10, update request signal generator 401 always generates an update request signal when an NG signal is output from CRC section 104, and outputs the generated update request signal to update request signal transmitter 108. That is, the packet receiving apparatus transmits an update request signal every time an error is detected in a header.

Referring to transmission packet generator 205 shown in FIG.11, update request signal counter 501 comprises a timer and a counter and counts the number of times an error signal is received in a predetermined time. That is, update request signal generator 501 counts the number of update request signals output from update request signal receiver 208 in a predetermined time. Then, when the number of times update request signals are received in the predetermined time reaches a predetermined number, update request signal counter 501 instructs compression method selector 502 to select UPDATE_FULLHEADER.

Following the instruction of update request signal counter 501, compression method selector 502 selects UPDATE_FULLHEADER.

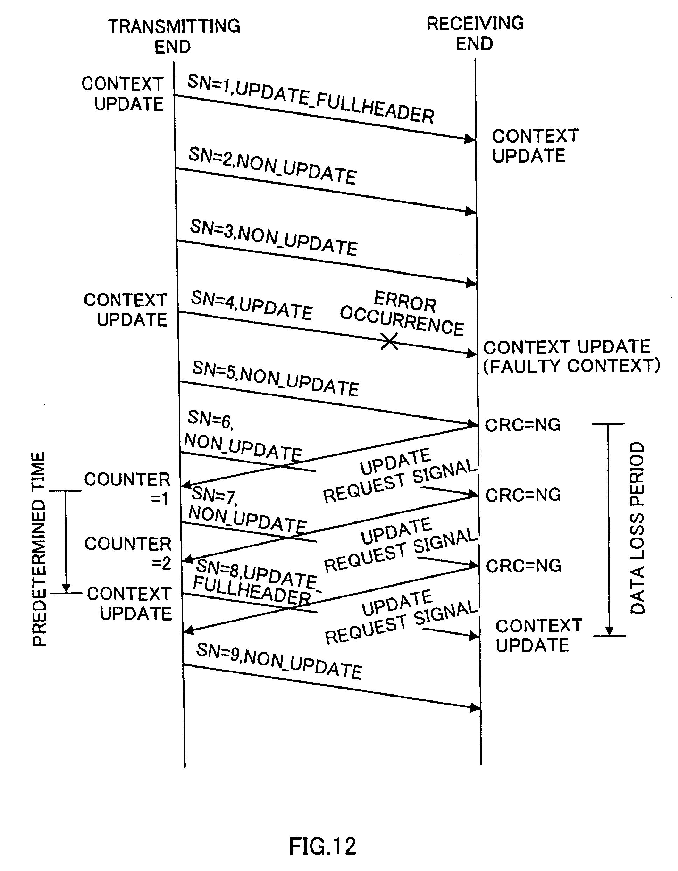

Next, the steps of transmission/reception in packet transmission performed between a packet transmitting apparatus of the above configuration and a packet receiving apparatus of the above configuration will be described in detail with reference to a sequence diagram. FIG.12 is a sequence diagram illustrating the steps of transmission/reception of packet transmission performed between a packet transmitting apparatus according to the second embodiment of the present invention and a packet receiving apparatus according to the second embodiment of the present invention. Incidentally, in FIG.12, the transmitting end refers to a packet transmitting apparatus of the above configuration and the receiving side refers to a packet receiving apparatus of the above configuration.

Now assume that, as shown in FIG.12, as in FIG.9, an error occurs during transmission of UPDATE of SN=4 and the packet receiving apparatus fails to detect this error. That is, assume that in the packet receiving apparatus the context is updated with the faulty header. The context then becomes a faulty context, and the CRC result of the header of the packet of SN=5, the CRC result of the header of the packet of SN=6, and the CRC result of the header of the packet of SN=7 become all NG. Consequently, an update request signal is transmitted for each of the packet of SN=5, the packet of SN=6, and the packet of SN=7.

In the update request signal counter 501 of trnamsission packet generator 205 shown in FIG.11, when an update request signal for the packet of SN=5 is output from update request signal receiver 208, the counter becomes "1" and the timer starts clocking a predetermined time. Moreover, in update request signal counter 501, when an update request signal for the packet of SN=6 is output from update request signal receiver 208, the counter increments by "1" and becomes "2."

Now, assume that the predetermined number of times set in update request signal counter 501 is "2," thereby judging that the frequency of error occurrence is high when two errors are detected in the predetermined time. Then, update request signal counter 501 instructs compression method selector 502 to select UPDATE_FULLHEADER when the value on the counter becomes "2" within the predetermined time. Compression method selector 502 makes the first packet input from CRC bit appender 204 after the instruction from update request signal counter 501 UPDATE_FULLHEADER. In the example shown in FIG.12, the packet of SN=8 becomes UPDATE_FULLHEADER. Thus, the packet transmitting apparatus transmits UPDATE_FULLHEADER only when the frequency of error occurrence is high. Incidentally, the counter that update request signal counter 501 comprises is reset when the predetermined time expires or when update request signal counter 501 instructs compression method selector 502 to select UPDATE_FULLHEADER.

Then, in the packet receiving apparatus, when the packet of SN=9 is received, the context is updated correctly.

Incidentally, in the present embodiment, it is possible to use an RTT (Round Trip Time) measured in advance as the predetermined time set in the timer of update request signal counter 501. The detailed method of RTT measurement is stipulated by the IETF in RFC1889.

Thus, according to the present embodiment, the packet receiving apparatus always requests a context update when detecting an error, and the packet transmitting apparatus transmits UPDATE_FULLHEADER when a plurality of update requests are received in a predetermined time. By this means, UPDATE_FULLHEADER is transmitted only when the frequency of error occurrence is high, so that it is possible to shorten the period in which data is lost at the packet receiving apparatus, without decreasing header compression efficiency and packet transmission efficiency.

Furthermore, according to the present embodiment, since the packet receiving apparatus does not count the number of times an error is detected, the configuration of the packet receiving apparatus can be further simplified compared to the first embodiment. Consequently, when the packet receiving apparatus is mounted in a communication terminal apparatus for use in a mobile communication system, the device size of the communication terminal apparatus can be made smaller in comparison to the first embodiment.

Although the above embodiments were described with reference to cases where the packet transmitting apparatus and the packet receiving apparatus are used in a wireless communication system, the present invention is by no means limited to this, and it is possible to use the packet transmitting apparatus and the packet receiving apparatus of the above embodiments in a wired communication system.

Moreover, although the above embodiments were described with reference to cases where packet transmission and packet reception are performed by means of a packet transmitting apparatus and a packet receiving apparatus, the present invention is by no means limited to this, and it is possible to perform these packet transmission and packet reception by means of software. For example, it is possible to store a program that executes the above packet transmission and the above packet reception in a ROM (Read Only Memory) in advance and operate this program by means of a CPU (Central Processing Unit). Likewise it is possible to store a program that executes the above packet transmission and the above packet reception in a computer-readable memory medium, record the program stored in the memory medium in a RAM of a computer (Random Access Memory), and operates the computer by this program. In these cases, the same functions and advantages as in the above-described embodiments can be achieved.

It is also possible to store a program that executes the above packet transmission and the above packet reception on a server, transmits the program stored on the server to a client upon request from the client, and execute the program on the client. In this case, the same functions and advantages as in the above described embodiments can be achieved.

It is furthermore possible to mount the packet transmitting apparatus according to the above embodiments in an image distribution apparatus that performs image distribution. Likewise it is possible to mount the packet receiving apparatus according to the above embodiments in a communication terminal apparatus for use in a mobile communication system. In these cases, the same functions and advantages as in the above-described embodiments can be achieved.

Although RTP, UDP, and IP are used in combination for the protocol for the above embodiments, the present invention is by no means limited to this and is applicable to packet communication that uses other protocols.

As described above, it is possible to shorten the period in which data is lost at the receiving end without decreasing header compression efficiency and packet transmission efficiency.

The present application is based on Japanese Patent Application No.2000-277075 filed on September 12, 2000, entire content of which is incorporated herein by reference.

## Claims

1. A packet receiving apparatus for use in a packet communication system in which header compression and decompression are performed using reference information, said packet receiving apparatus comprising:
a detector that detects whether or not there is an error in a header of a packet; and
a transmitter that transmits a request for an update of the reference information when said detector continuously detects errors in headers of a plurality of packets.

2. A communication terminal apparatus having a packet receiving apparatus,
wherein said packet receiving apparatus is for use in a packet communication system, in which header compression and decompression are performed using reference information and comprises:
a detector that detects whether or not there is an error in a header of a packet; and
a transmitter that transmits a request for an update of the reference information when said detector continuously detects errors in headers of a plurality of packets.

3. A packet transmitting apparatus for use in a packet communication system in which header compression and decompression are performed using reference information, said packet transmitting apparatus comprising:
a receiver that receives a request for an update of the reference information, said request transmitted from a packet receiving apparatus; and
a transmitter that, when the plurality of requests are received in a predetermined time, transmits a packet with a header used for the update of the reference information after the header decompression is performed in the packet receiving apparatus without reference to the reference information.

4. An image distribution apparatus having a packet transmitting apparatus,
wherein said packet transmitting apparatus is for use in a packet communication system, in which header compression and decompression are performed using reference information, and comprises:
a receiver that receives a request for an update of the reference information, said request transmitted from a packet receiving apparatus; and
a transmitter that, when the plurality of requests are received in a predetermined time, transmits a packet with a header used for the update of the reference information after the header decompression is performed in the packet receiving apparatus without reference to the reference information.

5. A program that causes a computer to execute:
a detection step of detecting whether or not there is an error in a header of a packet; and
a transmission step of transmitting to a communication partner a request for an update of the reference information when errors are detected continuously in headers of a plurality of packets.

6. A program that causes a computer to execute:
a reception step of receiving a request for an update of reference information used at a communication partner end for header decompression; and
a transmission step of transmitting, when the plurality of requests are received in a predetermined time, transmits a packet with a header used for the update of the reference information after the header decompression is performed at the communication partner end without reference to the reference information.

7. A packet transmission method for use in a packet communication system in which header compression and decompression are performed using reference information, said method comprising:
at a packet receiving end, transmitting a request for an update of the reference information to a packet transmitting end when errors are detected continuously in headers of a plurality of received packets; and
at the packet transmitting end, when the request is received, transmitting a packet with a header used for the update of the reference information after the header decompression is performed at the packet receiving end without reference to the reference information.

8. A packet transmission method for use in a packet communication system in which header compression and decompression are performed using reference information, said method comprising:
at a packet receiving end, transmitting a request for an update of the reference information when an error is detected in a header of a packet; and
at a packet transmitting end, when the plurality of requests are received in a predetermined time, transmitting a packet with a header used for the update of the reference information after the header decompression is performed at the packet receiving end without reference to the reference information.
